# FASCICULE DE BREVET EUROPEEN

(11) **EP 2 459 471 B1**
(45) Date de publication et mention de la délivrance du brevet: **25.12.2013**
(21) Numéro de dépôt: 09805807.6
(22) Date de dépôt: 30.12.2009
(51) Int. Cl.: B65G 47/08, B65G 47/82

(54) **PROCEDE ET INSTALLATION DE GROUPAGE DE PRODUITS, EN VUE DE LEUR ENCAISSAGE**
VERFAHREN UND ANLAGE ZUR GRUPPIERUNG VON PRODUKTEN ZUR KASTENVERPACKUNG
METHOD AND INSTALLATION FOR GROUPING PRODUCTS, WITH A VIEW TO CASE PACKING

(30) Priorité: 30.07.2009 FR 0955340
(43) Date de publication de la demande: 06.06.2012
(73) Titulaire: Sidel Participations, 76930 Octeville sur Mer (FR)
(72) Inventeur: DUCHEMIN, Guillaume, F-76930 Octeville-sur-Mer (FR); MOUGIN, Didier, F-76930 Octeville-sur-Mer (FR); GATOS, David, F-76930 Octeville-sur-Mer (FR); GARNIER, Thierry, F-76930 Octeville-sur-Mer (FR)
(74) Mandataire: Cabinet Plasseraud
(86) Numéro de dépôt international: PCT/FR2009/052721
(87) Numéro de publication internationale: WO 2011/012775

(56) Documents cités:
- EP-A1- 0 265 559
- EP-A1- 1 052 200
- WO-A2-2008/022296
- DD-A3- 250 023
- FR-A1- 2 918 359
- GB-A- 1 183 475
- NL-A- 6 700 965
- US-A1- 2004 112 714

## Description

La présente invention concerne un procédé de groupage de produits en vue de leur encaissage, par exemple ; elle concerne également l'installation de groupage de produits du genre flacons, bouteilles ou autres, en vue de leur encaissage.

Le groupage de produits peut s'effectuer de différentes façons selon le type et la nature des produits et aussi selon les cadences souhaitées.

Une forme de groupage est notamment décrite dans le document FR 2 918 359 : les produits arrivent en ligne sur un convoyeur d'amenée et ils sont pris en charge, à la volée, par un dispositif de collecte, appelé collecteur, en forme de peigne, qui est disposé transversalement par rapport au sens longitudinal d'arrivée desdits produits.

Ce collecteur est animé d'un mouvement en boucle qui comprend une première partie pour réaliser la capture des produits puis leur transfert vers un poste de dépose et une deuxième partie pour ramener ledit collecteur à la case départ.

Dans la première partie de la boucle, le collecteur se déplace, d'une part, pour la capture des produits, en combinant deux mouvements pas à pas : un mouvement longitudinal pour remonter la file de produits, et un mouvement transversal pour le remplissage dudit collecteur et, d'autre part, un simple mouvement transversal pour le transfert du lot vers le poste de dépose où il est pris en charge par d'autres moyens.

La deuxième partie de la boucle comprend des mouvements combinés ou non dans le sens longitudinal et transversal pour ramener le collecteur au niveau du convoyeur d'amenée, devant le premier produit à capter.

Pour certaines applications, un tel dispositif permet aussi de déposer les produits de part et d'autre du convoyeur d'amenée de façon à gérer au mieux les cadences de l'encaissage.

Toutefois, les mouvements du convoyeur d'amenée et les mouvements du collecteur sont très différents : le convoyeur d'amenée a un mouvement continu alors que le collecteur a un mouvement séquentiel avec des mouvements relativement complexes qui génèrent des accélérations et des vitesses élevées qui peuvent avoir tendance à provoquer des incidents.

Le mouvement pour ramener le collecteur devant le premier produit à capter se fait à vide ; il constitue un temps mort qui, par conséquent, limite la cadence du dispositif de capture des produits. EP 1 052 200 A1 décrit le préambule de la revendication 1.

La présente invention propose un procédé selon la revendication 13 et une installation de groupage de produits selon la revendication 1, qui permettent d'instaurer une continuité au niveau de l'opération de capture des produits sur le convoyeur d'amenée, pour mettre le collecteur, d'une certaine façon, en phase avec ledit convoyeur d'amenée.

Cette continuité au niveau de l'opération de capture des produits permet en plus de simplifier de façon singulière les mouvements qui sont mis en oeuvre dans le cycle de capture et de soulager le matériel en réduisant notamment les vitesses et les accélérations auxquelles il est soumis.

Le procédé de groupage, selon l'invention, est décrit dans la revendication 13.

Selon un premier mode de réalisation, le mouvement de recul et d'escamotage du collecteur, à partir du poste de dépose, pour réaliser le largage du lot de produits, consiste en un mouvement longitudinal parallèle à l'axe du mouvement du convoyeur d'amenée desdits produits.

Selon l'invention, pour des produits dont la section n'est pas circulaire, du genre flacons de forme ovoïde, par exemple, et qui sont collectés dans une configuration dite « en épis », dans des alvéoles disposées en oblique, le mouvement de recul et d'escamotage du collecteur, à partir du poste de dépose, est un mouvement en oblique, parallèle à l'orientation des alvéoles dudit collecteur de façon à larguer le lot de produits sans les bousculer, avant d'effectuer un retour complet à la case départ, au poste de capture des produits.

Toujours selon l'invention, le procédé consiste à évacuer les produits regroupés en lots au niveau du poste de dépose par des moyens appropriés du genre robot ou autres, le lot constitué pouvant ensuite être placé à l'intérieur d'un contenant, une caisse, par exemple.

L'invention concerne également l'installation décrite dans la revendication 1.

Selon une autre disposition de l'invention, les collecteurs sont disposés perpendiculairement au sens d'avancement longitudinal des produits sur ledit convoyeur d'amenée et ils se déplacent au-dessus dudit convoyeur d'amenée, dans un même plan qui est parallèle à celui dudit convoyeur d'amenée et de la table d'accueil, de façon à capter les produits, d'une part, à un même niveau sur la hauteur du corps desdits produits et, d'autre part, toujours au même endroit sur ledit convoyeur d'amenée, au poste de capture.

Toujours selon l'invention, les collecteurs sont portés, chacun, par un chariot et par l'intermédiaire d'un actionneur en forme de vérin qui est solidaire dudit chariot, lesquels chariots sont superposés et guidés transversalement par rapport à l'axe longitudinal, et lesdits actionneurs déplacent les collecteurs pour les faire passer de l'axe transversal où ils réalisent la collecte et la dépose des produits à une position située en retrait qui leur permet de revenir à la case départ, en se croisant l'un l'autre.

Selon un premier mode de réalisation, les chariots et les actionneurs des collecteurs se situent en aval du convoyeur d'amenée des produits, au même niveau que lesdits collecteurs.

Selon un second mode de réalisation, les chariots et les actionneurs des collecteurs se situent sous l'extrémité aval du convoyeur d'amenée des produits et les collecteurs, qui se situent au-dessus de ladite extrémité aval, sont portés par une structure en forme de U reliant lesdits collecteurs aux actionneurs correspondants.

Toujours selon l'invention, les structures qui portent les collecteurs comportent des bras horizontaux, lesquels bras, en forme de baïonnette, sont décalés verticalement l'un par rapport à l'autre pour permettre le croisement des collecteurs correspondants.

Selon une variante, les collecteurs sont portés par des bras qui se situent dans le plan desdits collecteurs, lesquels bras, et collecteurs, sont mobiles verticalement, au moyen de vérins interposés entre l'actionneur et le chariot correspondant, pour réaliser un décalage vertical permettant le croisement desdits collecteurs l'un par rapport à l'autre.

Toujours selon l'invention, le collecteur peut comporter des alvéoles dont la profondeur longitudinale permet d'accueillir plusieurs produits qui se prêtent à des regroupements préalables.

Selon l'invention, le collecteur comporte des alvéoles qui sont disposées en oblique par rapport au sens d'arrivée des produits, selon un angle non nul de l'ordre de 10 à 45°, de façon à former des lots de produits qui sont disposés dans une configuration dite « en épis » pour des produits dont la section, au niveau de la prise, n'est pas circulaire mais ovoïde, par exemple, comme c'est le cas pour des flacons notamment. Dans ce cas, les collecteurs sont chacun portés par un actionneur qui est disposé en oblique également, avec le même angle que les alvéoles et les extrémités latérales desdits collecteurs sont aménagées pour permettre un aboutement de deux collecteurs consécutifs afin de réaliser un enchaînement des mouvements de capture des produits qui arrivent en continu.

Toujours selon l'invention, le collecteur peut être constitué de plusieurs plaques alvéolées qui sont superposées et espacées au moyen d'entretoises, de façon à offrir plusieurs zones d'appui aux produits captés afin d'améliorer leur stabilité lors de leur capture et pendant leur déplacement.

Selon une autre disposition de l'invention, l'installation peut comporter au moins un robot de prise en charge des lots de produits au poste de dépose, ledit robot étant aménagé avec une tête capable de prélever au moins une ligne de produits, flacons ou autres, en vue de leur encaissage, par exemple.

Selon une autre disposition de l'invention, le poste de dépose des produits, flacons ou autres, est constitué d'un plan fixe sur lequel les produits captés prennent place au fur et à mesure de leur déplacement latéral, entraînés par le collecteur, lequel plan fixe peut comporter un aménagement, du type bossage ou dos d'âne, par exemple, pour former un obstacle et retenir les produits au niveau dudit poste de dépose, lors du mouvement de recul dudit collecteur.

Selon une autre disposition de l'invention, pour le cas d'un encaissage du lot de produits dans une caisse du type "wrap around", l'installation peut comporter un dispositif poussoir qui permet, par exemple, un simple transfert latéral dudit lot de produits vers un système d'encaissage disposé en bordure du poste de dépose sur lequel circule une découpe du type wrap around.

Pour pouvoir être exécutée, l'invention est exposée de façon suffisamment claire et complète dans la description suivante qui, en plus, est accompagnée de dessins dans lesquels :
- la figure 1 est une élévation schématique de l'installation, selon l'invention ;
- la figure 2 est une vue schématique de dessus de l'installation ;
- la figure 3 est une vue schématique en bout de l'installation, avec les deux collecteurs en position, mais sans le détail des moyens de manoeuvre desdits collecteurs ;
- la figure 4 est une élévation schématique de l'installation selon l'invention, comme la figure 1, avec une inversion de la position des deux collecteurs ;
- les figures 5 à 14 illustrent le mouvement des collecteurs pour effectuer le regroupement des produits sur le poste de prise en charge ;
- la figure 15 montre le chemin parcouru par chacun des collecteurs, au fur et à mesure des positions qu'ils prennent pour effectuer un cycle complet de capture et de dépose des produits ;
- la figure 16 est une élévation schématique d'une variante de réalisation de l'invention montrant les moyens de manoeuvre des collecteurs, lesquels moyens de manoeuvre sont disposés sous l'extrémité aval du convoyeur d'amenée des produits ;
- la figure 17 correspond à la figure 16 avec une inversion du rôle des deux collecteurs ;
- la figure 18 représente également une élévation schématique de l'installation selon un autre mode de réalisation dans lequel les collecteurs changent de niveau pour se croiser ;
- la figure 19 correspond à la figure 18 avec une inversion du rôle des collecteurs ;
- la figure 20 représente un collecteur en forme de peigne comportant des alvéoles disposées en oblique pour capter des produits du genre flacons dont la section n'est pas circulaire mais ovoïde, par exemple, et pour former un lot de produits disposés en épis ;
- la figure 21 représente un collecteur constitué de deux plaques alvéolées superposées et maintenues espacées par des entretoises ;
- la figure 22 montre un cycle de collecte pour un peigne dont les alvéoles sont disposées en oblique, comme représenté figure 20.

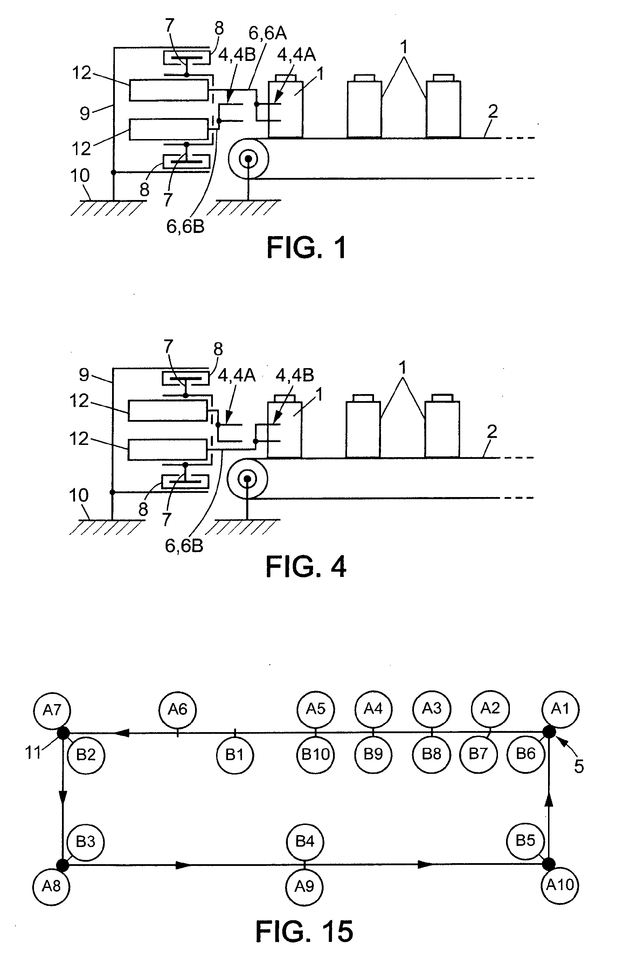

La figure 1 montre des produits 1 disposés sur le convoyeur 2 d'amenée. Ces produits 1 arrivent à la queue leu leu, sur une file, et ils sont, de préférence, régulièrement espacés ou regroupés en plusieurs unités, par des moyens appropriés, non représentés.

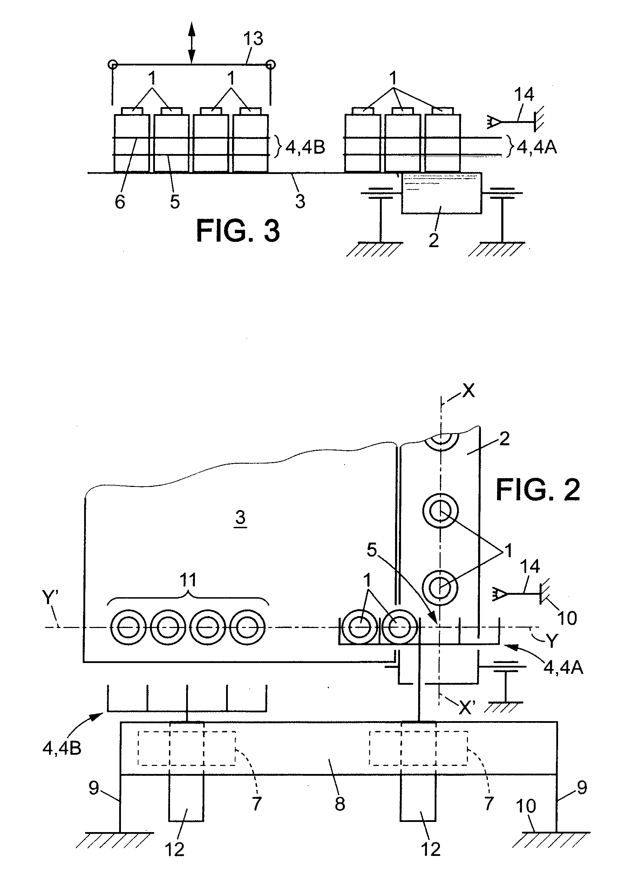

Le convoyeur 2 d'amenée des produits est constitué d'un tapis sans fin et il comporte, latéralement, au niveau de son extrémité aval, une table 3. Cette table 3, visible figure 2 notamment, est destinée à recevoir les produits 1 qui ont été regroupés sous la forme d'un lot ; elle se situe dans le même plan horizontal que le brin supérieur du convoyeur 2 d'amenée desdits produits.

Cette table 3 se présente sous la forme d'un simple plan fixe sur lequel les produits 1 peuvent glisser.

Les produits 1 sont captés, à l'extrémité aval du convoyeur 2, par un dispositif de capture qui comprend deux collecteurs 4. Ces collecteurs 4, repérés 4A et 4B, se relaient pour capter à tour de rôle les produits 1 qui arrivent de façon continue, à la queue leu leu, amenés par le convoyeur 2, sur un axe longitudinal xx'. La capture des produits 1 s'effectue de préférence toujours au même endroit, à l'extrémité aval du convoyeur 2 d'amenée, au niveau d'un poste 5 de capture, figure 2. Cette capture s'effectue pas à pas par les collecteurs 4A et 4B qui se déplacent, durant l'opération, notamment, sur un axe transversal yy', perpendiculairement à l'axe xx', comme représentée dans le mode de réalisation de la figure 2.

Ces collecteurs 4 se présentent sous la forme de peignes, ou de râteliers. Chaque collecteur 4 peut comporter, en fonction de la forme des produits 1 à capter, plusieurs peignes superposés ; les collecteurs 4 représentés sur les figures comportent deux peignes superposés, légèrement espacés, pour bien caler les produits 1 et garantir une bonne stabilité verticale pendant leur déplacement transversal, notamment.

Les collecteurs 4 sont portés par des bras 6 qui sont aménagés de façon à permettre un croisement desdits collecteurs. Ces bras 6A et 6B sont coudés, en forme de baïonnette, pour permettre le croisement des collecteurs 4A et 4B, comme détaillé plus loin.

Chaque collecteur 4 est disposé sur un chariot 7 qui est animé d'un mouvement transversal par rapport au convoyeur 2 d'amenée, c'est-à-dire qu'il se déplace parallèlement à l'axe yy'. Chaque chariot 7 est guidé au moyen d'un système de glissière 8, par exemple, et ces glissières 8, correspondant à chaque chariot 7, sont superposées, portées par un châssis 9 qui est solidaire du bâti général 10 de l'installation.

Les chariots 7 sont superposés eux aussi et ils sont mobiles transversalement sous l'effet d'organes d'actionnement appropriés du genre servomoteurs avec réducteurs et courroies crantées pour, d'une part, capter les produits 1 sur le convoyeur 2 d'amenée et, d'autre part, aller déposer tous lesdits produits 1 sur le côté du convoyeur 2, c'est-à-dire sur la table 3, au niveau du poste 11 de dépose où lesdits produits 1 forment un lot en attente d'être évacué par des moyens complémentaires appropriés.

La table 3 peut comporter, au niveau du poste 11 de dépose, un aménagement en forme de bossage ou de dos d'âne, par exemple, pour retenir les produits lorsque le collecteur effectue son mouvement de recul afin de larguer les produits au niveau dudit poste 11.

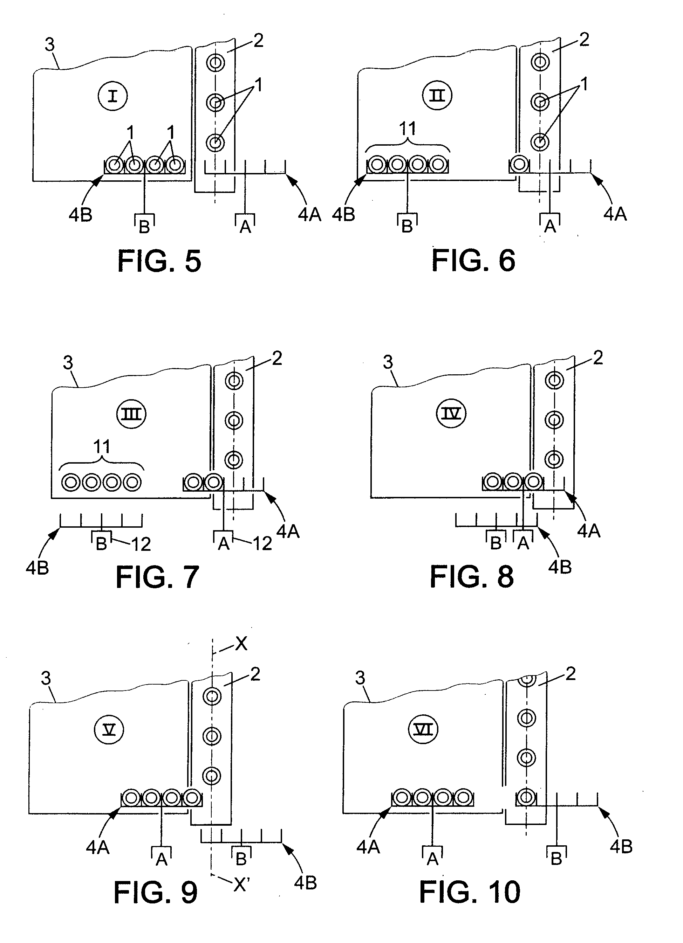

Chaque collecteur 4 est animé d'un mouvement longitudinal, parallèle à l'axe xx', pour passer d'une position inactive, en retrait par rapport à la ligne yy', à une position active de capture et de transfert-dépose, sur cette ligne yy', comme détaillé plus loin en liaison avec les figures 5 à 15.

Chaque collecteur 4 est porté par un chariot 7, mais par l'intermédiaire d'un actionneur 12 en forme de vérin, lequel actionneur 12 réalise le déplacement longitudinal dudit collecteur 4 entre la ligne de capture et la ligne de retour à la case départ. La tige du vérin qui constitue l'actionneur 12 fait office de bras 6 pour porter le collecteur 4 associé.

La course de ces actionneurs 12 est relativement faible ; elle est choisie pour libérer les produits 1 au poste de dépose et pour éviter toute interférence entre les deux collecteurs 4 lors de leur croisement au cours de leur déplacement selon le cycle détaillé plus loin.

Les collecteurs 4 se situent, respectivement, au même niveau l'un par rapport à l'autre et par rapport au convoyeur 2 d'amenée. La capture des produits 1 s'effectue à niveau constant sur la hauteur du corps desdits produits 1, quel que soit le collecteur en action, lequel niveau peut être ajusté en fonction du type de produit 1, par le biais de moyens de réglage appropriés qui modifient la position desdits collecteurs par rapport au niveau dudit convoyeur 2 d'amenée.

Lorsque les produits 1 sont largués par l'un ou l'autre des collecteurs 4, au niveau du poste 11 de dépose, un dispositif de préhension approprié comprenant une tête 13 de préhension, comme représenté figure 3, procède à l'évacuation du lot de produits 1 posés sur la table 3.

Ces moyens d'évacuation du lot de produits 1 sont, par exemple, constitués d'un robot manipulateur, non représenté, qui est disposé à proximité de la table 3 pour saisir ledit lot et le positionner dans une caisse ou autre selon sa destination.

Pour charger le lot de produits 1 dans une caisse du type "wrap around", l'installation peut également comporter, de façon accessoire, un poussoir, non représenté, qui déplace ledit lot sur la table 3 pour l'introduire dans ladite caisse qui arrive, par exemple, sur un convoyeur jouxtant ladite table 3.

La figure 4 montre les collecteurs 4A et 4B dans une position qui est inversée par rapport à leur position représentée figure 1. Sur cette figure 4, le collecteur 4B capte les produits 1 disposés sur le convoyeur 2 d'amenée et le collecteur 4A est en retrait ; ce collecteur 4A est positionné pour se déplacer transversalement sans interférer avec ledit collecteur 4B et pour se replacer de façon à prendre le relai dudit collecteur 4B et capter, à son tour, les produits 1 qui arrivent à la queue leu leu sur ledit convoyeur 2.

Les figures 5 à 14 illustrent quelques étapes du procédé de capture des produits 1 qui arrivent sur le convoyeur 2 d'amenée, lesquelles étapes sont repérées de I à X en chiffres romains.

La figure 5 correspond à l'étape I chiffre ; elle représente, schématiquement, le convoyeur 2 d'amenée des produits 1 et on remarque, sur cette figure, le collecteur 4A, porté par son actionneur repéré A, qui est en position active de capture des produits et le collecteur 4B qui, lui, est saturé de produits, c'est-à-dire que les différents produits 1 remplissent toutes les cases dudit collecteur 4B. Les produits 1 du collecteur 4B sont sur la table 3 d'accueil et se déplacent en glissant transversalement au fur et à mesure du déplacement de ce collecteur 4B.

La figure 6 correspond à l'étape II ; elle montre le collecteur 4A après la capture d'un premier produit 1 ; ce collecteur 4A s'est décalé latéralement vers la table 3 d'accueil dès la capture du premier produit 1 pour se positionner en attente du second produit 1. Pendant ce temps, le collecteur 4B a été placé, avec son lot de produits 1, au niveau du poste 11 de dépose.

La vitesse de transfert du collecteur avec le lot de produits 1 vers le poste 11 de dépose est supérieure à sa vitesse lors de l'opération de capture. Le temps mis pour le remplissage de toutes les cases, ou alvéoles, du collecteur correspond au temps mis pour effectuer tout le reste de la boucle, comme détaillé ci-après.

Au niveau de la figure 7, qui correspond à l'étape III, le collecteur 4B s'est escamoté en larguant les différents produits au poste 11 de dépose et il s'est retiré longitudinalement, selon une ligne parallèle à l'orientation de ses alvéoles, par un mouvement de recul qui est provoqué par la rétraction de l'actionneur B avant de se déplacer, ensuite, transversalement pour croiser le collecteur 4A, comme représenté sur la figure 8 qui correspond à l'étape IV.

Ce collecteur 4A continue son opération de capture des produits 1 et, sur la figure 9 qui correspond à l'étape V, on remarque que ce collecteur 4A est saturé en produits 1 alors que le collecteur 4B est arrivé en face du poste 5 de capture, avec sa première alvéole centrée sur l'axe xx' du convoyeur 2 d'amenée.

La figure 10 qui correspond à l'étape VI est similaire à la figure 5 avec une inversion des collecteurs 4A et 4B. Le collecteur 4A se déplace transversalement au-dessus de la table 3 d'accueil, vers le poste 11 de dépose et de prise en charge et le collecteur 4B commence la capture des produits 1.

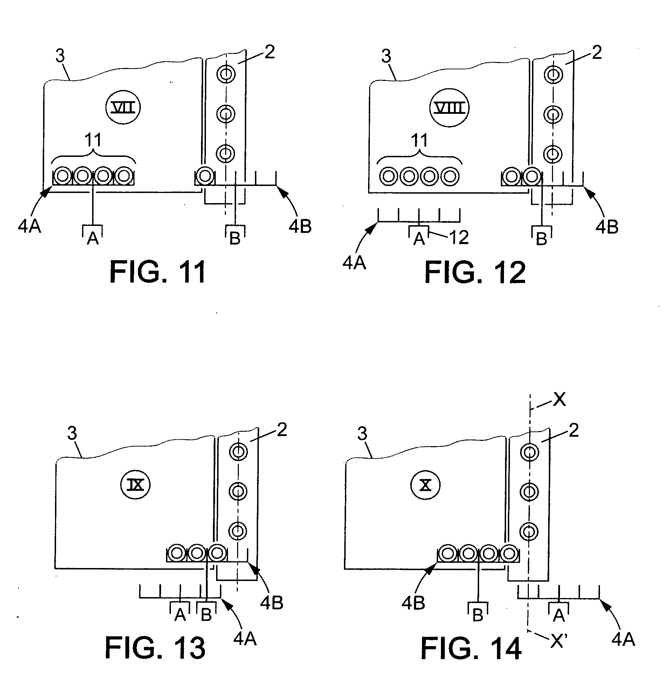

Sur la figure 11, qui correspond à l'étape VII, le collecteur 4A positionne son lot de produits 1 au niveau du poste 11 de dépose et, sur la figure 12, qui correspond à l'étape VIII, il largue le lot de produits avant de se déplacer, à son tour, longitudinalement, par un effet de rétraction de son actionneur A. Pendant ce temps, le collecteur 4B capte les différents produits 1 qui se présentent sur le convoyeur 2 d'amenée.

Sur la figure 13, qui correspond à l'étape IX, le collecteur 4A se déplace transversalement et croise le collecteur 4B avant de positionner, comme montré sur la figure 14 qui correspond à la dernière étape X, sa première alvéole dans l'axe xx' du convoyeur 2 d'amenée des produits 1 alors que le collecteur 4B est saturé et recommence son mouvement, comme représenté figure 5, étape I, sur la table 3 d'accueil pour mettre son lot de produits 1 au niveau du poste 11 de dépose et le cycle continu.

Ce cycle des deux collecteurs 4A et 4B est schématisé figure 15. Ce cycle fermé est du type polygonal, carré, par exemple, ou plutôt rectangulaire, avec comme point de départ le point qui correspond à la position du collecteur 4A figure 5 et qui est repéré A1 sur la figure 15. La position A1 sur le cycle de la figure 15 correspond à l'étape I repérée en chiffre romain, figure 5, sur la table 3 d'accueil.

Ce point A1 est l'équivalent de l'étape VI pour le collecteur 4B. On remarque, sur ce cycle, que les vitesses des collecteurs évoluent selon l'opération en cours.

Durant la phase de capture des produits 1, les déplacements transversaux des collecteurs 4 sont faibles ; ils sont égaux au pas entre deux alvéoles adjacentes. Les lois de mouvement des collecteurs : le collecteur 4A de A1 à A4 et le collecteur 4B de B6 à B9 sont, de manière préférentielle, du type cloche ou triangle, c'est-à-dire une accélération immédiatement suivie d'une décélération sans maintenir de palier à vitesse constante.

Au moment où les produits 1 commencent à entrer dans les alvéoles d'un collecteur 4, ce collecteur peut être à l'arrêt. Toutefois, selon la nature et la vitesse d'arrivée des produits, pour des produits qui, par exemple, ont une faible longueur, sur l'axe xx', le collecteur peut évoluer avec un mouvement dont la vitesse est constante et continue et, dans ce cas, les produits pénètrent les alvéoles et sont embarqués à la volée.

Le cycle se décompose en deux périodes de même durée : une période allant de A1 à A4 et de B6 à B9 pour la capture des produits 1 et une période allant de A5 à A10 et de B7 à B5 qui comprend le temps de la dépose des produit, de A7 et B2, et le retour à la case départ pour prendre le relai en matière de capture en passant par A8 jusqu'à A10 et B3 jusqu'à B5.

Le temps mis par les collecteurs pour effectuer la partie du cycle qui correspond à la capture des produits est en relation avec le débit du convoyeur 2 d'amenée.

Le temps dont dispose chaque collecteur 4 lorsqu'il est saturé en produits 1 pour effectuer l'autre partie du cycle, correspond à ce temps de captage des produits 1 jusqu'à saturation de l'autre collecteur 4.

Ce cycle, de type carré, ou plutôt rectangulaire, présente l'avantage de mettre en oeuvre des moyens relativement simples constitués, d'une part, de chariots 7 montés sur des glissières 8 pour le mouvement transversal et, d'autre part, d'actionneurs 12, du type vérins, pour le mouvement longitudinal desdits chariots 7.

De façon préférentielle, la capture des produits 1 s'effectue sous le contrôle d'un capteur 14 qui détecte le passage d'un produit et permet, par l'intermédiaire d'un automate, de connaître sa distance par rapport au collecteur 4 affecté à la capture du produit 1 qui arrive sur le convoyeur 2 d'amenée, en fonction aussi de la vitesse dudit convoyeur 2. Ce capteur 14, visible figures 2 et 3, est positionné latéralement, sur le côté du convoyeur 2 qui est opposé à la table 3 d'accueil, et en amont de la position des collecteurs 4 lorsqu'ils sont en position de capture.

Les collecteurs 4 (4A, 4B) comportent, de préférence, des peignes installés de façon amovible par rapport aux actionneurs pour pouvoir mettre plus facilement en rapport la forme des alvéoles de ces peignes avec la section des produits 1 à regrouper.

Chaque collecteur 4 peut se présenter, par exemple, sous la forme d'une plaque en matériau thermoplastique avec des alvéoles qui ont une forme qui correspond le plus fidèlement possible à celle des produits à capter. Ces alvéoles sont centrées sur un axe qui est parallèle à l'axe xx' du convoyeur 2 d'amenée des produits et leur dimension peut aussi varier selon que l'on souhaite capter un ou deux produits ou plus, dans le sens longitudinal en particulier.

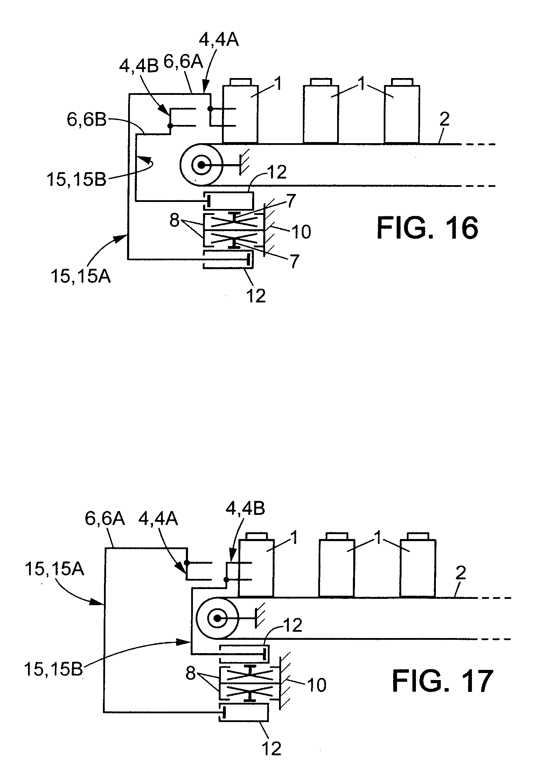

La figure 16 représente une variante de réalisation de l'installation selon l'invention. Les collecteurs 4 restent situés au même niveau pour capter les produits 1 toujours dans la même position et les moyens d'animation des collecteurs sont disposés sous l'extrémité aval du convoyeur 2 d'amenée.

Cet aménagement permet notamment d'envisager de libérer le passage à l'extrémité du convoyeur 2 d'amenée des produits. En fait, il permet de conserver une possibilité, avec un aménagement approprié des bras porte-collecteurs et/ou du système de convoyage, comme pour la machine décrite dans le brevet FR 2 918 359 précité, de shunter la machine de groupage et de faire passer les produits qui sont amenés par le convoyeur 2 d'amenée, vers une autre destination, en aval de la machine.

Une structure 15, en forme de U, s'étend entre chaque collecteur 4 et son actionneur 12.

Comme représenté figure 16, la structure 15A, qui porte le collecteur 4A, s'étend autour de la structure 15B qui porte le collecteur 4B pour permettre le croisement desdits collecteurs 4 et des structures 15.

La figure 17 représente une inversion des collecteurs 4A et 4B. Le collecteur 4B est en position active de capture des produits 1 alors que le collecteur 4A est escamoté pour croiser le collecteur 4B dans son mouvement de retour à la position initiale de capture, à la suite du collecteur 4B.

Le mouvement des collecteurs 4A et 4B est identique à celui du mouvement des collecteurs représentés figure 1 notamment.

Cet aménagement des chariots 7 qui portent les actionneurs 12 et les collecteurs correspondants permet de déplacer les glissières 8 sous le niveau du convoyeur 2 d'amenée et de réduire l'encombrement général de la machine.

On remarque, sur ces figures 16 et 17, que les bras 6A et 6B des structures 14A et 14B sont, comme précédemment, en forme de baïonnette, pour décaler les collecteurs 4A et 4B correspondants, de façon à permettre le croisement desdits collecteurs 4 correspondants.

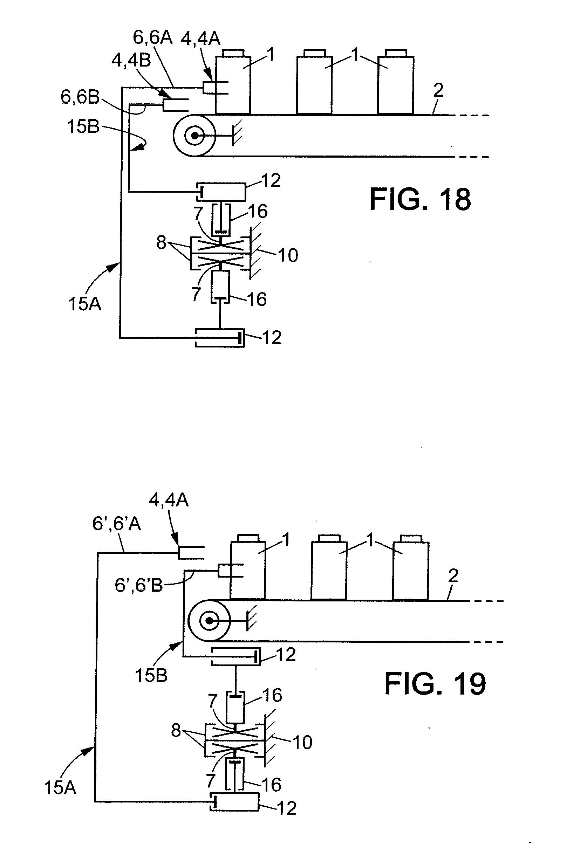

Les figures 18 et 19 représentent une variante de réalisation de l'installation illustrée figures 16 et 17. Dans ce mode de réalisation, les bras 6'A et 6'B de chaque structure 15A et 15B, respectivement, sont positionnés dans l'axe médian du collecteur 4 correspondant, c'est-à-dire que ces bras 6' sont rectilignes et non en forme de baïonnette comme c'était le cas précédemment sur les figures 16 et 17.

Pour permettre le croisement des collecteurs, chaque structure 15A et 15B est mobile verticalement au moyen d'un vérin 16 qui, comme représenté sur les figures 18 et 19, est interposé entre le chariot 7 et l'actionneur 12 correspondant.

Là encore, le positionnement des moyens de manoeuvre des collecteurs 4, sous l'extrémité aval du convoyeur 2 d'amenée, permet de libérer l'extrémité aval dudit convoyeur 2, au niveau des collecteurs 4 de façon à donner à la machine, une forme plus compacte.

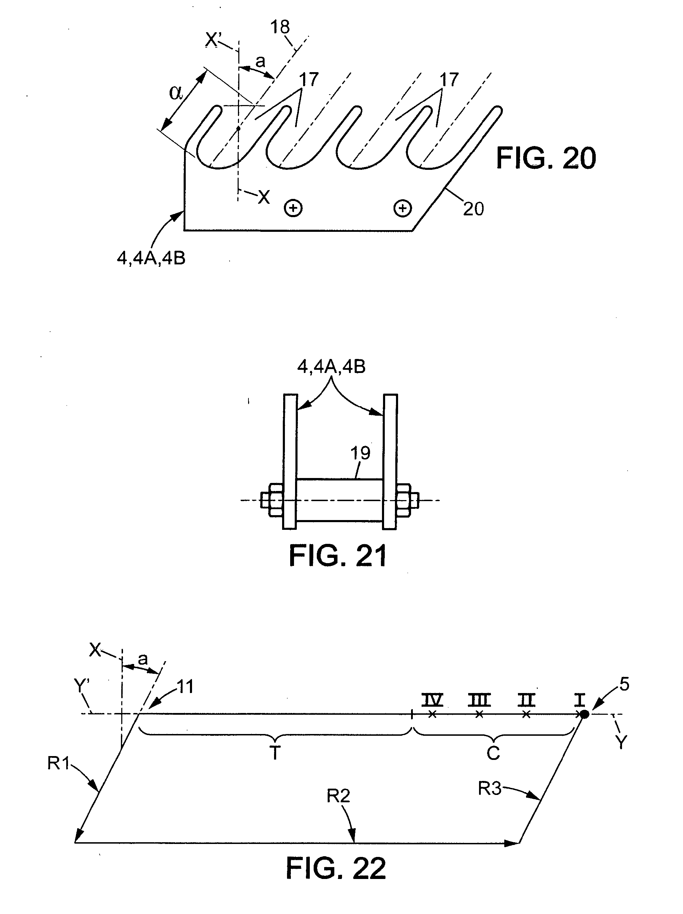

La figure 20 représente un collecteur 4, aussi bien 4A que 4B, en forme de peigne, apte à préparer un rang rectiligne de produits, lequel collecteur 4 est aménagé pour accueillir des produits 1 dont la section n'est pas circulaire comme des produits du genre flacons de forme ovoïde, par exemple.

Ces produits 1 de forme ovoïde sont regroupés par ce collecteur 4 et ils sont disposés selon une configuration dite « en épis ». Cette configuration en épis permet de regrouper plusieurs rangs de produits, deux par exemple, afin de former un lot compact ce qui permet aussi de réaliser, au moyen d'un robot approprié, un encaissage immédiat dudit lot de flacons dans une caisse du type "caisse américaine" ou du type "wrap around".

Ce collecteur 4, pour produits 1 du type flacons ovoïdes, comporte des alvéoles 17 qui sont disposées en oblique par rapport à l'axe longitudinal xx' d'arrivée desdits produits 1, lesquels produits 1 arrivent alignés, les uns derrière les autres, orienté avec leur grand axe disposé longitudinalement, sur ledit axe longitudinal xx'. En revanche, l'axe 18 des alvéoles 17 fait un angle a avec l'axe longitudinal xx' longitudinal ; cet angle a, non nul, est compris entre 10 et 45°, par exemple.

Les alvéoles 17 obliques du collecteur 4 réalisent une orientation automatique des produits 1 en forme de flacons grâce à la vitesse d'introduction desdits produits dans lesdites alvéoles 17.

La figure 21 montre, vu de côté, un collecteur 4, aussi bien 4A que 4B, qui est constitué de deux collecteurs, du type à alvéoles droites ou obliques, lesquels collecteurs sont disposés l'un au-dessus de l'autre, séparés par une ou plusieurs entretoises 19. Cet assemblage commode de deux collecteurs 4, avec de simples boulons, permet d'assurer une meilleure stabilité aux produits 1 lors de leur capture.

La figure 15 illustrait le cheminement en boucle des collecteurs 4 selon un cycle dit « carré », pour des collecteurs 4 dont les alvéoles sont centrées sur l'axe longitudinal xx' d'arrivée des produits 1. La figure 22 illustre également, de façon schématique, ce cheminement en boucle, mais pour des collecteurs 4 dont les alvéoles 17 sont obliques, comme détaillées figure 20.

Ces collecteurs 4, munis d'alvéoles 17 obliques, fonctionnent également selon un cycle polygonal. Le mouvement de chaque collecteur 4 commence par la prise en charge, au poste 5, des produits 1 qui arrivent sur le convoyeur 2 d'amenée et cette capture s'accompagne d'un mouvement pas à pas qui est repéré C sur cette figure 22, avec un repère de I à IV, en chiffres romains, pour chaque capture de produits 1.

Le mouvement C de capture et le mouvement de transfert suivant, repéré T, s'effectuent selon un mouvement transversal, perpendiculaire à l'axe longitudinal xx'. Le mouvement de transfert se termine au poste 11 de dépose où le lot de produits 1 est largué par le collecteur 4.

Pour le largage du lot de produits 1, le collecteur 4 effectue un mouvement de recul selon une direction dont l'orientation correspond à celle des alvéoles 17 pour éviter de déplacer ou de bousculer les produits 1 positionnés dans lesdites alvéoles 17.

Ainsi, comme représenté figure 22, le mouvement de recul du collecteur 4 s'étend sur un segment R1 rectiligne qui est parallèle à l'axe 18 des alvéoles 17.

Ce mouvement de recul longitudinal, mais en oblique, du colleteur 4, après le largage du lot au poste 5 de dépose implique de disposer d'un actionneur 12, du genre vérin, comme indiqué précédemment, dont le mouvement est orienté selon l'axe 18 des alvéoles 17 pour réaliser un déplacement rectiligne comme indiqué par le segment R1.

Après le mouvement de recul, le collecteur 4 se déplace sur un segment R2 transversal avant d'être placé à nouveau au niveau de la case départ au poste 5 de capture des produits 1.

Le mouvement final de retour, en oblique, du collecteur 4 vide, à la case départ, s'effectue selon un segment R3 qui est lui aussi parallèle à l'axe 18 des alvéoles 17.

Le collecteur 4 comporte, à son extrémité aval, comme représenté figure 20, une face 20 aménagée en oblique, comme les alvéoles 17, pour permettre une mise en place rapide et un aboutement des collecteurs 4, les uns à la suite des autres, au poste 5 de capture, afin de réaliser, comme précédemment décrit, une capture en continu des produits qui arrivent sur le convoyeur 2 d'amenée.

## Revendications

1. Installation de groupage de produits comprenant :
- un convoyeur (2) d'amenée des produits (1), selon un axe xx'
- une table (3) comportant un poste (11) de dépose pour accueillir le lot de produits (1) captée, laquelle table (3) est disposée au même niveau et sur un côté dudit convoyeur (2),
- des collecteurs (4), en forme de peignes, qui sont mobiles au-dessus du niveau de ladite table (3) et dudit convoyeur (2) d'amenée, et
- des moyens appropriés pour déplacer chaque collecteur par rapport audit convoyeur (2) d'amenée et par rapport à la table (3) d'accueil de façon à effectuer une capture en continu desdits produite (1),
**caractérisée en ce qu'**elle comprend :
- des collecteurs (4) qui sont portés, chacun, par un chariot (7) par l'intermédiaire d'un actionneur (12), lesquels chariots (7) sont superposés et guidés transversalement par rapport à l'axe longitudinal xx', lesquels actionneurs (12) déplacent les collecteurs (4) pour les faire passer d'un axe transversal yy' où ils réalisent la collecte et la dépose des produits (1) à une position située en retrait qui leur permet de revenir à la case départ, en se croisant l'un l'autre, et
- des moyens de contrôle de la position des produits (1) sur le convoyeur (2) d'amenée, lesquels moyene sont constitués d'un capteur (14) et d'un automate pour coordonner, à travers un automate, les mouvements du collecteur (4) au niveau du poste (5) de capture.

2. Installation de groupage de produits selon la revendication 1, **caractérisée en ce qu'**elle comporte des chariots (7) et des actionneurs (12) qui se situent en aval du convoyeur (2) d'amenée des produite, au même niveau que les collecteurs (4).

3. Installation de groupage de produits selon la revendication 1, **caractérisée en ce qu'**elle comporte des chariots (7) et des actionneurs (12) qui se situent sous l'extrémité aval du convoyeur (2), et des collecteurs (4), qui se situent au-dessus de ladite extrémité aval, lesquels collecteurs (4) sont portés par une structure (15) qui s'étend devant ladite extrémité aval, reliant lesdits collecteurs (4) aux actionneurs (12) correspondante.

4. Installation de groupage de produits selon la revendication 1, **caractérisée en ce qu'**elle comporte des collecteurs (4) qui sont portés par des bras (6) horizontaux, lesquels bras (6), en forme de baïonnettes, sont décalés verticalement l'un par rapport à l'autre pour permettre le croisement desdits collecteurs (4), à tour de rôle.

5. Installation de groupage de produits selon la revendication 1, **caractérisée en ce qu'**elle comporte des collecteurs (4) portés par des bras qui se situent dans le plan desdits collecteurs, lesquels bras et collecteurs sont mobiles verticalement au moyen de vérins (16) interposés entre l'actionneur et le chariot correspondant, pour réaliser un décalage vertical permettant le croisement desdits collecteurs l'un par rapport à l'autre, à tour de rôle.

6. Installation de groupage de produits selon la revendication 1, **caractérisée en ce que** chaque collecteur (4) comporte des alvéoles dont la forme est adaptée à la section des produits (1) à capter.

7. Installation de groupage de produite selon la revendication 1, **caractérisée en ce que** le collecteur (4) comporte des alvéoles dont la profondeur longitudinale permet d'accueillir plusieurs produits (1) qui se prêtent à des regroupements préalables.

8. Installation de groupage de produits selon la revendication 1, **caractérisée en ce qu'**elle comporte des collecteurs (4) munis d'alvéoles (17) qui sont disposées en oblique par rapport au sens d'arrivée des produits (1), selon un angle a de l'ordre de 10 et 45°, lesquels collecteurs (4) sont chacun portés par un actionneur (12) disposé en oblique également, comme lesdites alvéoles 17.

9. Installation de groupage de produits selon la revendication 8, **caractérisée en ce que** les extrémités latérales des collecteurs (4) à alvéoles (17) obliques sont aménagées pour permettre un aboutement de deux collecteurs (4) consécutifs de façon à réaliser une capture en continu des produits qui arrivent sur le convoyeur (2) d'amenée.

10. Installation de groupage de produits selon la revendication 1, **caractérisée en ce qu'**elle comporte au moins un robot de prise en charge des lots de produite (1) au poste (11) de dépose, ledit robot étant aménagé avec une tête (13) capable de prélever au moins un lot de produits (1), flacons ou autres, en vue de leur encaissage.

11. Installation de groupage de produits selon la revendication 1, **caractérisée en ce qu'**elle comporte un poste (11) de dépose des produits (1) qui est constitué d'un plan fixe sur lequel les produits (1) captés prennent place au fur et à mesure de leur déplacement latéral par collecteur, puis en un mouvement de retour au cours duquel il croise le second collecteur (4B) qui est en cours de chargement avant de se positionner à la suite dudit second collecteur (4B) et prendre la suite de l'opération de capture lorsque ce dernier est saturé à son tour,
- à déplacer le lot formé des produits (1) qui ont été largués par ledit premier collecteur (4A) au poste (11) de dépose,
- à déposer les produits (1) captés par ledit second collecteur (4B) au niveau dudit poste (11) de dépose,
- à animer ledit second collecteur (4B) avec le même mouvement en boucle que celui dudit premier collecteur (4A) et à poursuivre le cycle de capture, de regroupement et de largage des produits (1) au niveau dudit poste (11) de dépose, et
- à effectuer la capture des produits sur le convoyeur d'amenée ; le procédé consistant,
pour des produits (1) dont la section n'est pas circulaire, du type flacons de forme ovoïde et qui sont collectés dans une configuration en épis, dans des alvéoles (17) disposées en oblique, à réaliser, lors du mouvement de recul du collecteur (4) à partir du poste (11) de dépose, un mouvement qui est parallèle à l'orientation desdites alvéoles (17) avant de retourner à la case départ, au poste (5) de capture des produits (1), ladite capture des produits sur le convoyeur d'amenée s'effectuant sous le contrôle d'un capteur (14) qui détecte l'arrivée des produits (1) sur le convoyeur (2) d'amenée, lequel capteur (14) déclenche, à travers un automate, l'arrêt du collecteur (4) au niveau du poste (5) de capture. le collecteur (4), lequel plan fixe comporte un aménagement du type bossage ou dos d'âne pour retenir le lot de produite lors du mouvement de recul du collecteur.

12. Installation de groupage de produits selon la revendication 1, **caractérisée en ce qu'**elle comporte, pour le cas d'un encaissage des produits (1) dans une caisse du type "wrap around", un dispositif poussoir qui permet de réaliser un transfert latéral du lot de produite (1) vers un système d'encaissage dispose en bordure de la table (3) d'accueil et sur lequel circule une découpe du type « wrap around ».

13. Procédé de groupage de produits qui arrivent longitudinalement à la queue leu leu, espacés sur un convoyeur (2) d'amenée, consistant :
- à capter en continu à la volée lesdits produite (1) sur ledit convoyeur (2) au moyen d'une paire de collecteurs (4) qui se déplacent transversalement selon un axe yy',
- à capter les produits (1) au moyen d'un premier collecteur (4A) puis, lorsque ledit premier collecteur (4A) est saturé, à capter de la même façon les produits (1) au moyen d'un second collecteur (4B) qui prend immédiatement la suite dudit premier collecteur 4A,
- à déplacer transversalement ledit premier collecteur (4A) saturé, à une vitesse qui est supérieure à la vitesse de capture et à larguer le lot de produits (1) au niveau d'un poste (11) de dépose qui se situe sur le côté dudit convoyeur (2) d'amenée,
- à animer ensuite ledit premier collecteur (4A) d'un mouvement en boucle qui se décompose en un mouvement de recul pour larguer le lot de produits (1) au niveau dudit poste (11) de dépose, selon une ligne qui est parallèle à l'orientation des alvéoles (17) dudit

## Patentansprüche

1. Anlage zur Gruppierung von Produkten, umfassend:
- einen Förderer (2) zum Zuführen der Produkte (1) entlang einer Achse xx'
- einen Tisch (3), der eine Ablagestation (11) zum Aufnehmen der Charge aufgenommener Produkte (1) umfasst, wobei der Tisch (3) in derselben Höhe wie der Förderer (2) und auf einer Seite desselben angeordnet ist,
- kammförmige Sammler (4), die oberhalb der Höhe des Tischs (3) und des Zufuhrförderers (2) bewegbar sind, und
- geeignete Mittel zum Bewegen jedes Sammlers in Bezug auf den Zufuhrförderer (2) und in Bezug auf den Aufnahmetisch (3), um eine fortlaufende Aufnahme der Produkte (1) vorzunehmen,
**dadurch gekennzeichnet, dass** sie Folgendes umfasst:
- Sammler (4), die jeweils über ein Stellglied (12) von einem Wagen (7) getragen werden, wobei die Wagen (7) übereinander angeordnet sind und quer zur Längsachse xx' geführt werden, wobei die Stellglieder (12) die Sammler (4) bewegen, um sie von einer Querachse yy', wo sie die Sammlung und Ablage der Produkte (1) ausführen, zu einer rückwärtig befindlichen Position, die ihnen die Rückkehr zum Ausgangspunkt ermöglicht, zu bewegen, wobei sie sich gegenseitig kreuzen, und
- Mittel zur Kontrolle der Position der Produkte (1) auf dem Zufuhrförderer (2), wobei die Mittel aus einem Sensor (14) und einem Automaten ausgebildet sind, um über einen Automaten die Bewegungen des Sammlers (4) in Höhe der Aufnahmestation (5) zu koordinieren.

2. Anlage zur Gruppierung von Produkten nach Anspruch 1, **dadurch gekennzeichnet, dass** sie Wagen (7) und Stellglieder (12) umfasst, die sich stromabwärts bezüglich des Förderers (2) zum Zuführen der Produkte in derselben Höhe wie die Sammler (4) befinden.

3. Anlage zur Gruppierung von Produkten nach Anspruch 1, **dadurch gekennzeichnet, dass** sie Wagen (7) und Stellglieder (12), die sich unterhalb des stromabwärtigen Endes des Förderers (2) befinden, sowie Sammler (4), die sich oberhalb des stromabwärtigen Endes befinden, umfasst, wobei die Sammler (4) von einer Struktur (15) getragen werden, die sich vor dem stromabwärtigen Ende erstreckt und die Sammler (4) mit den entsprechenden Stellgliedern (12) verbindet.

4. Anlage zur Gruppierung von Produkten nach Anspruch 1, **dadurch gekennzeichnet, dass** sie Sammler (4) umfasst, die von horizontalen Armen (6) getragen werden, wobei die bajonettförmigen Arme (6) vertikal zueinander versetzt sind, um das abwechselnde Kreuzen der Sammler (4) zu ermöglichen.

5. Anlage zur Gruppierung von Produkten nach Anspruch 1, **dadurch gekennzeichnet, dass** sie Sammler (4) umfasst, die von Armen getragen werden, welche sich in der Ebene der Sammler befinden, wobei die Arme und die Sammler mit Hilfe von Zylindern (16), die zwischen dem Stellglied und dem entsprechenden Wagen angeordnet sind, vertikal bewegbar sind, um eine vertikale Verschiebung vorzunehmen, die das abwechselnde Kreuzen der Sammler in Bezug zueinander ermöglicht.

6. Anlage zur Gruppierung von Produkten nach Anspruch 1, **dadurch gekennzeichnet, dass** jeder Sammler (4) Zellen umfasst, deren Form an den Querschnitt der aufzunehmenden Produkte (1) angepasst ist.

7. Anlage zur Gruppierung von Produkten nach Anspruch 1, **dadurch gekennzeichnet, dass** der Sammler (4) Zellen umfasst, deren Längstiefe die Aufnahme mehrerer Produkte (1), die sich für vorherige Gruppierungen eignen, ermöglicht.

8. Anlage zur Gruppierung von Produkten nach Anspruch 1, **dadurch gekennzeichnet, dass** sie Sammler (4) umfasst, die mit Zellen (17) ausgestattet sind, die schräg zur Ankunftsrichtung der Produkte (1) in einem Winkel a im Bereich von 10 und 45° angeordnet sind, wobei die Sammler (4) jeweils durch ein Stellglied (12) getragen werden, das ebenso wie die Zellen (17) schräg angeordnet ist.

9. Anlage zur Gruppierung von Produkten nach Anspruch 8, **dadurch gekennzeichnet, dass** die Seitenenden der Sammler (4) mit schrägen Zellen (17) so angeordnet sind, dass sie ein Anlegen zweier aufeinanderfolgender Sammler (4) ermöglichen, um eine fortlaufende Aufnahme der auf dem Zufuhrförderer (2) ankommenden Produkte zu ermöglichen.

10. Anlage zur Gruppierung von Produkten nach Anspruch 1, **dadurch gekennzeichnet, dass** sie zumindest einen Roboter zur Aufnahme der Chargen von Produkten (1) an der Ablagestation (11) umfasst, wobei der Roboter mit einem Kopf (13) ausgestattet ist, der zumindest eine Charge von Produkten (1), Fläschchen o. a. zur Kasten- bzw. Kistenverpackung entnehmen kann.

11. Anlage zur Gruppierung von Produkten nach Anspruch 1, **dadurch gekennzeichnet, dass** sie eine Station (11) zur Ablage der Produkte (1) umfasst, die aus einer festen Ebene ausgebildet ist, auf der die aufgenommenen Produkte (1) im Zuge ihrer seitlichen Bewegung durch den Sammler (4) abgelegt werden, wobei die feste Ebene eine buckel-oder schwellenartige Einrichtung umfasst, um die Produktcharge bei der Rückzugsbewegung des Sammlers zurückzuhalten.

12. Anlage zur Gruppierung von Produkten nach Anspruch 1, **dadurch gekennzeichnet, dass** sie im Falle einer Verpackung der Produkte (1) in einem Kasten bzw. einer Kiste des Typs "wrap around" eine Schubvorrichtung umfasst, die eine seitliche Verschiebung der Charge von Produkten (1) in Richtung eines Kasten- bzw. Kistenverpackungssystems ermöglicht. das am Rand des Aufnahmetischs (3) angeordnet ist und auf dem sich ein Zuschnitt des Typs "wrap around" bewegt.

13. Verfahren zur Gruppierung von Produkten, die voneinander beabstandet längs hintereinander auf einem Zufuhrförderer (2) ankommen, das darin besteht:
- die Produkte (1) auf dem Förderer (2) mit Hilfe eines zweier Sammler (4), die sich quer entlang einer Achse yy' bewegen, verzögerungsfrei aufzunehmen,
- die Produkte (1) mit Hilfe eines ersten Sammlers (4A) aufzunehmen und anschließend, sobald der erste Sammler (4A) vollständig gefüllt ist, die Produkte (1) mit Hilfe eines zweiten Sammlers (4B), der unverzüglich die Nachfolge des ersten Sammlers (4A) übernimmt, in derselben Weise aufzunehmen,
- den ersten vollständig gefüllten Sammler (4A) in Querrichtung mit einer höheren Geschwindigkeit als der Aufnahmegeschwindigkeit zu bewegen und die Charge von Produkten (1) in Höhe einer Ablagestation (11), die sich auf der Seite des Zufuhrförderers (2) befindet, abzuwerfen,
- anschließend den ersten Sammler (4A) in eine Schleifenbewegung zu versetzen, die sich in eine Rückzugsbewegung zum Abwerfen der Charge von Produkten (1) in Höhe der Ablagestation (11) entlang einer Linie, die parallel zur Ausrichtung der Zellen (17) des Sammlers ist, und eine anschließende Rückbewegung, bei der er den zweiten, gerade mit dem Laden beschäftigten Sammler (4B) kreuzt, untergliedert, bevor er sich hinter dem zweiten Sammler (4B) positioniert und den Aufnahmevorgang fortsetzt, sobald Letzterer seinerseits vollständig gefüllt ist,
- die aus den Produkten (1), die vom ersten Sammler (4A) an der Ablagestation (11) abgeworfen wurden, ausgebildete Charge zu bewegen,
- die vom zweiten Sammler (4B) in Höhe der Ablagestation (11) aufgenommenen Produkte (1) abzulegen,
- den zweiten Sammler (4B) in dieselbe Schleifenbewegung wie der des ersten Sammlers (4A) zu versetzen und den Zyklus aus Aufnahme, Gruppierung und Abwurf der Produkte (1) in Höhe der Ablagestation (11) fortzusetzen, und
- die Aufnahme der Produkte auf dem Zufuhrförderer auszuführen;
wobei das Verfahren darin besteht, bei den Produkten (1), deren Querschnitt nicht kreisförmig, von der Art eiförmiger Fläschchen ist und die in einer geneigten Konfiguration in den schräg angeordneten Zellen (17) gesammelt werden, während der Rückzugsbewegung des Sammlers (4) von der Ablagestation (11) vor der Rückkehr zum Ausgangspunkt an der Station (5) zur Aufnahme der Produkte (1) eine Bewegung auszuführen, die parallel zur Ausrichtung der Zellen (17) ist, wobei die Aufnahme der Produkte auf dem Zufuhrförderer unter Kontrolle eines Sensors (14) erfolgt, der die Ankunft der Produkte (1) auf dem Zufuhrförderer (2) erkennt, wobei der Sensor (14) über einen Automaten den Sammler (4) in Höhe der Aufnahmestation (5) stoppt.

## Claims

1. Equipment for grouping together products comprising :
- an infeed conveyor (2) of the products (1), along an axis xx'
- a table (3) comprising a removal station (11) for receiving the collected batch of products (1), which table (3) is arranged at the same level as and on one side of said conveyor (2),
- collectors (4), in the form of combs, which are mobile above the level of said table (3) and said infeed conveyor (2), and
- appropriate means for moving each collector relative to said infeed conveyor (2) and relative to the receiving table (3), so as to carry out continuous collection of said products (1),
**characterized in that** it comprises:
- collectors (4) that are each held by a carriage (7) by means of an actuator (12), which carriages (7) are superimposed and guided transversely relative to the longitudinal axis xx', which actuators (12) move the collectors (4) so as to transfer them from a transverse axis yy' where they carry out the collection and removal of the products (1) to a retracted position that makes it possible for them to return to the start, by intersecting one another, and
- means for controlling the position of the products (1) on the infeed conveyor (2), which means are constituted by a sensor (14) and an automatic controller for coordinating, via an automatic controller, the movements of the collector (4) at the collection station (5).

2. Equipment for grouping together products according to claim 1, **characterized in that** it comprises carriages (7) and actuators (12) that are situated downstream of the infeed conveyor (2) of the products, at the same level as the collectors (4).

3. Equipment for grouping together products according to claim 1, **characterized in that** it comprises carriages (7) and actuators (12) that are situated under the downstream end of the conveyor (2), and collectors (4) that are situated above said downstream end, which collectors (4) are held by a structure (15) that extends in front of said downstream end, connecting said collectors (4) to the corresponding actuators (12).

4. Equipment for grouping together products according to claim 1, **characterized in that** it comprises collectors (4) that are held by horizontal arms (6), which arms (6) are bayonet-shaped and are offset vertically relative to each other in order to allow said collectors (4) to intersect one another in turn.

5. Equipment for grouping together products according to claim 1, **characterized in that** it comprises collectors (4) held by arms that are situated in the plane of said collectors, which arms and collectors are vertically mobile by means of cylinders (16) interposed between the actuator and the corresponding carriage, in order be vertically offset allowing said collectors to intersect one another in turn.

6. Equipment for grouping together products according to claim 1, **characterized in that** each collector (4) comprises recesses the shape of which is adapted to the cross-section of the products (1) to be collected.

7. Equipment for grouping together products according to claim 1, **characterized in that** the collector (4) comprises recesses the longitudinal depth of which makes it possible to receive several products (1) that lend themselves to being grouped together beforehand.

8. Equipment for grouping together products according to claim 1, **characterized in that** it comprises collectors (4) provided with recesses (17) that are arranged obliquely relative to the direction of arrival of the products (1), at an angle a of the order of 10 and 45°, which collectors (4) are each held by an actuator (12) also arranged obliquely, like said recesses 17.

9. Equipment for grouping together products according to claim 8, **characterized in that** the lateral ends of the collectors (4) with oblique recesses (17) are arranged in order to allow two consecutive collectors (4) to be placed end to end so as to carry out continuous collection of the products arriving on the infeed conveyor (2).

10. Equipment for grouping together products according to claim 1, **characterized in that** it comprises at least one robot for picking up the batches of products (1) at the removal station (11), said robot being arranged with a head (13) capable of picking up at least one batch of products (1), vials or the like, with a view to case packing same.

11. Equipment for grouping together products according to claim 1, **characterized in that** it comprises a station (11) for removal of the products (1) that is constituted by a stationary plane on which the collected products (1) take their place as they are moved laterally by the collector (4), which stationary plane comprises an arrangement of the boss or hump type in order to retain the batch of products when the collector moves backwards.

12. Equipment for grouping together products according to claim 1, **characterized in that** it comprises, in the event that the products (1) are packed in a case of the "wrap around" type, a pushing device that makes it possible to carry out a lateral transfer of the batch of products (1) to a case packing system arranged at the edge of the receiving table (3) and on which a blank of the "wrap around" type is travelling.

13. Method for grouping together products arriving longitudinally one behind the other, spaced apart on an infeed conveyor (2), **characterized in that** it consists of:
- continuously collecting on the fly said products (1) on said conveyor(2), by means of a pair of collectors (4), which move transversely along an axis yy',
- collecting the products (1) by means of a first collector (4A) then, when said first collector (4A) is filled up, collecting the products (1) in the same way by means of a second collector (4B) that immediately takes over from said first collector 4A,
- moving said first filled collector (4A) transversely, at a speed that is greater than the collection speed, and dropping off the batch of products (1) at a removal station (11) that is situated on the side of said infeed conveyor (2),
- then moving said first collector (4A) in a loop that is divided into a backward movement for dropping off the batch of products (1) at said removal station (11), along a line that is parallel to the orientation of the recesses (17) of said collector, then a return movement during which it intersects said second collector (4B) which is being loaded, before being positioned behind said second collector (4B) and taking over the collection operation when the latter is in turn filled up,
- moving the batch formed by the products (1) that have been dropped off by said first collector (4A) at the removal station (11),
- depositing the products (1) collected by said second collector (4B) at said removal station (11),
- moving said second collector (4B) in the same loop as said first collector (4A) and continuing the cycle of collecting, grouping together and dropping off the products (1) at said removal station (11)
- carrying out the collection of the products on the infeed conveyor;
the method consisting for products (1) the cross-section of which is not circular, of the oval vial type, and which are collected in a herringbone configuration in recesses (17) arranged obliquely, of carrying out, during the backward movement of the collector (4) from the removal station (11), a movement that is parallel to the orientation of said recesses (17) before returning to the start, at the collection station (5) of the products (1), said collection of the products on the infeed conveyor being carried out under the control of a sensor (14) that detects the arrival of the products (1) on the infeed conveyor (2), which sensor (14) triggers, via an automatic controller, the stopping of the collector (4) at the collection station (5).
